# EUROPÄISCHE PATENTANMELDUNG

(11) **EP 0 542 056 A1**
(43) Veröffentlichungstag der Anmeldung: **19.05.1993**
(21) Anmeldenummer: 92118580.7
(22) Anmeldetag: 30.10.1992
(51) Int. Cl.: B23G 5/18

(54) **Schneidwerkzeug, insbesondere Gewindefräser**

(30) Priorität: 14.11.1991 DE 4137467
(71) Anmelder: NEUMO GRUNDBESITZ-GmbH, D-75438 Knittlingen (DE)
(72) Erfinder: Ehrenberg, Harry, Haraw Asaf 6 (IL)
(74) Vertreter: Patentanwälte Ruff, Beier, Schöndorf und Mütschele

(57) **Zusammenfassung**

Ein Gewinderfräser (1) weist an einem Schaft (2) als Schneidkörper (6) eine zur Bildung eines Steigungsverlaufes geschränkte Gewindeschneid-Wendeplatte auf, deren die Schneidkante (11) bildende Schneidvorsprünge (14) um die Drehachse (3) um wenige Winkelgrade gegeneinander versetzt sind, so daß sie nicht schlagartig gleichzeitig, sondern in vorbestimmter Reihenfolge in Schneideingriff mit der Werkstückfläche (21) kommen. Dadurch ergeben sich eine sehr schonende Belastung und eine verbesserte Bearbeitungsgenauigkeit.

## Beschreibung

Die Erfindung betrifft ein Profil-Schneidwerkzeug, das zweckmäßig mindestens eine sich in einer Längsrichtung erstreckende Profilschneide aufweist, die zwei oder mehr in dieser Längsrichtung nebeneinander liegende Schneidvorsprünge bzw. zwischen diesen Schneidvertiefungen bildet, so daß das gesamte Profil der Profilschneide an einer ebenen, gekrümmten oder ähnlichen Werkstückfläche durch spanabhebende oder ähnliche Bearbeitung abgebildet werden kann.

Insbesondere wenn die Profilschneide wenigstens teilweise aus einem homogenen Werkstoff hergestellte bzw. nicht durch eine Körnung gebildete Schneidkanten aufweist, definieren diese zweckmäßig eine Schneiden-Brustfläche, eine Schneiden-Rückenfläche sowie seitliche Flanken der Schneidvorsprünge bzw. der Schneidvertiefungen. Die Brustfläche und die Rückenfläche liegen dann im Querschnitt durch die Schneidkante bzw. quer zu deren Haupt-Längsrichtung in einem definierten Schneidenwinkel zueinander, während die Rückenfläche gegenüber der Werkstückfläche einen Freiwinkel und die Brustfläche gegenüber dieser Werkstückfläche einen positiven oder negativen Anstellwinkel definieren kann. Die genannten Winkel sind abhängig von dem zu bearbeitenden Werkstoff, dem Werkstoff der Profilschneide, der Schnittgeschwindigkeit, der herzustellenden Oberflächenbeschaffenheit und ähnlichem.

Um z.B. gleichzeitig mehrere nebeneinander liegende und ggf. durch eine Vorschubbewegung kontinuierlich ineinander übergehende Nuten, wie die Gewindegänge eines ein- oder mehrgängigen Gewindes, herzustellen, kann man ein entsprechendes Profilwerkzeug verwenden und dieses durch den Vorschub etwa parallel zur Haupt-Längsrichtung seiner Profilschneide nach und nach in Eingriff mit dem Werkstück bringen. Dadurch übernimmt der in Vorschubrichtung vorderste Schneidvorsprung die Hauptarbeit, so daß die nachfolgenden Schneidvorsprünge weniger Schneidarbeit durchzuführen haben. Durch abnehmend niedrigere Ausbildung der Schneidvorsprünge in Richtung zum vordersten Schneidvorsprung kann dieser Nachteil gemildert werden, jedoch kommen auch hier die Schneidvorsprünge nur aufgrund der Vorschubbewegung nach und nach in Eingriff mit dem Werkstück, so daß sich lange Arbeitszeiten ergeben.

Dem kann dadurch entgegengewirkt werden, daß das Werkstück durch eine quer zur Haupt-Längsrichtung der Schneidkante bzw. zur Vorschubbewegung und zur quer dazu liegenden Arbeits- bzw. Schneidbewegung liegende Zustellbewegung gleichzeitig in den Arbeitsbereich zweier oder mehrerer Schneidvorsprünge bzw. Schneidvertiefungen gebracht wird, die etwa gleiche Profilhöhe haben können, jedoch kommen diese Vorsprünge und Vertiefungen dann gleichzeitig in Eingriff mit dem Werkstück, was eine schlagartige Belastung des entsprechenden Abschnittes der Profilschneide bzw. der gesamten Profilschneide mit sich bringt. Dies ist insbesondere bei solchen Werkzeugen der Fall, die im Gegensatz zu Profilbohrern, wie Gewindebohrern, über den Umfang nicht gleichmäßig verteilt in Eingriff mit dem Werkstück stehen, sondern wie ein Umfangsfräser, ein Hobel-Profilstahl oder dgl. während jedes Arbeitszyklus', z.B. während jeder Umdrehung, auf einem größeren Teilweg außer Eingriff und auf einem kleineren Teilweg in Eingriff mit dem Werkstück stehen, bis nach Ablauf einer größeren Anzahl von Arbeitszyklen aufgrund der Vorschubbewegung und/oder einer Zustellbewegung die Bearbeitung beendet ist. Eine Vorschubbewegung ist dabei auch meistens etwa gleich bzw. entgegengesetzt zur Schneidrichtung gerichtet, je nachdem, ob im Mitlauf oder im Gegenlauf bearbeitet wird.

Der Erfindung liegt des weiteren eine Aufgabe zugrunde, ein Schneidwerkzeug der genannten Art zu schaffen, bei dem Nachteile bekannter Ausbildungen oder der beschriebenen Art vermieden sind und das insbesondere eine Herabsetzung der Belastung beim Eingriff in das Werkstück gewährleistet.

Erfindungsgemäß sind auch Mittel vorgesehen, um die Profilschneide selbst dann nur nach und nach in Eingriff mit dem Werkstück zu bringen, wenn sie gegenüber dem Werkstück im wesentlichen ausschließlich ihre Schneidbewegung ausführt. Dadurch können benachbarte Längsabschnitte derselben Profilschneide bzw. benachbarte Schneidvorsprünge und/oder Schneidvertiefungen unabhängig von der Profilgebung aufeinanderfolgend in Eingriff mit dem Werkstück gebracht und so die jeweilige schlagartige Belastung der Profilschneide wesentlich reduziert werden. Z.B. kann ein auf einer gekrümmten Bahn laufender Profilvorsprung, der das Werkstück von einem Minimum zu einem Maximum und wieder zurück auf ein Minimum einer Tiefe des Schneideingriffes auf einer gekrümmten Bahn durchläuft, bereits das Maximum erreicht oder durchlaufen haben, bevor der nächste Schneidvorsprung in nennenswerten bzw. stärker belastenden Eingriff mit dem Werkstück gelangt.

Dadurch können die auf das Werkzeug wirkenden Lastwechsel wesentlich geglättet werden.

Die Aufeinanderfolge, mit welcher die Schneidvorsprünge in Eingriff kommen, kann auch dafür verwendet werden, daß auf das Werkstück bzw. die Profilschneide etwa parallel zu deren Haupt-Längsrichtung liegende Kraftvektoren konstanter bzw. wechselnder Richtung und/oder Größe wirken, die zur Stabilisierung des Werkzeuges, des Werkstückes und/oder deren Lagerung herangezogen werden können.

Bei einer bevorzugten Ausführungsform liegen mehrere im wesentlichen gleich große Schneidvorsprünge bzw. Schneidvertiefungen nach Art einer Zahnung in der Haupt-Längsrichtung hintereinander, die in Bezug auf die quer bzw. etwa rechtwinklig zu ihr liegende Richtung der Schneidbewegung um einen von der rechtwinkligen Lage abweichenden spitzen Winkel von z.B. wesentlich weniger als 30 oder 20° schräggestellt ist. Dadurch können auf einfache Weise die gleich weit vorstehenden äußeren Enden von Schneidvorsprüngen bzw. die gleich weit zurückstehenden Bodenflächen von Schneidvertiefungen, die jeweils durch Spitzen gebildet sein können, in der beschriebenen Weise gegeneinander versetzt sein.

Liegt die Rückenfläche mindestens eines Abschnittes der Profilschneide nicht etwa rechtwinklig zur Schneidrichtung, sondern demgegenüber z.B. so schräg, daß das äußere Ende des jeweiligen Schneidvorsprunges zuerst in Eingriff mit dem Werkstück kommt, so kommen die Flanken dieses Schneidvorsprunges, die gleichzeitig die Flanken benachbarter Schneidvertiefungen sein können, ebenfalls erst nach und nach über ihre Länge in Schneideingriff, wodurch auch der jeweilige einzelne Schneidvorsprung geschont wird. Z.B. kann die Rückenfläche durch eine vertiefte Span-Leitfläche gebildet sein, die im Bereich der Schneidprofilierung annähernd eben ist und im Abstand davon im Querschnitt konkav ausgerundet geformt ist.

Die erfindungsgemäße Ausbildung eignet sich außer für solche schneidwerkzeuge, bei welchen die Schneidkante einteilig mit einem Werkzeugschaft ausgebildet ist, auch für Schneidwerkzeuge mit einem gesonderten, am Schaft befestigten Schneidkörper, z.B. einer starr durch Lötung oder dgl. befestigten Schneidplatte oder sogar einer auswechselbar befestigten Wendeschneidplatte. Der Schneidkörper kann dabei entsprechend der Schrägstellung der Profilschneide selbst als ganzes gegenüber dem Schaft schräggestellt sein und/oder entsprechend der Schrägstellung in seiner Dicke verändert sein. Insbesondere bei im wesentlichen konstanter Dicke kann der Schneidkörper durch Schränkverformung eines Materialstranges annähernd konstanter Querschnitte diejenige Form erhalten, die für die versetzte Lage der Schneidvorsprünge erforderlich ist. Der nach Art einer Steilwendel um seine Längs-Mittelachse verformte Materialstrang kann dann durch Trennung entlang einer Längs-Mittelebene und/oder durch Abtrennen von Längsabschnitten in einzelne Schneidkörper unterteilt werden.

Die genannten Winkel können über die Länge der Profilschneide bzw. im Bereich von Schneidvorsprüngen oder Schneidvertiefungen unterschiedlich sein, z.B. so, daß in der Mitte der Länge der Profilschneide die theoretisch optimalsten Winkel gegeben sind und sich diese zu den Enden der Profilschneide geringfügig verändern, wodurch eine besonders einfache Herstellung oder Nachschärfung der Rückenfläche bzw. der Brustfläche möglich ist. Auch bei annähernder Konstanz des jeweiligen Winkels über einen Teil oder die gesamte Länge der Profilschneide können insbesondere die äußeren Endkanten der Schneidvorsprünge und/oder die Bodenflächen der Schneidvertiefungen in einer gemeinsamen, beispielsweise zylindrischen, Hüllfläche liegen, deren Achse bei einem Rotations-Schneidwerkzeug zweckmäßig mit dessen Achse zusammenfällt oder den Schneidkörper im Bereich der Mitte seiner Länge mittig zwischen denjenigen voneinander abgekehrten Körperflächen durchsetzt, die mit einer Kantenfläche an beiden Seiten des Schneidkörpers jeweils eine Schneidkante bilden. Die Rückenfläche kann statt konvex jedoch wenigstens teilweise auch konkav gekrümmt, eben, V-förmig oder als geschränkt verlaufende Fläche ausgebildet sein.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindung sind in den Zeichnungen dargestellt und werden im folgenden näher erläutert. In den Zeichnungen zeigen:
- Fig. 1: ein erfindungsgemäßes Schneidwerkzeug in ausschnittsweiser Ansicht,
- Fig. 2: einen Querschnitt durch das Schneidwerkzeug gemäß Fig. 1 und
- Fig. 3 bis 10: weitere Ausführungsformen von Profilschneiden in vereinfachter Ansicht.

Das Schneidwerkzeug 1 weist einen im wesentlichen als Rotationskörper ausgebildeten, wenigstens im Schneidbereich annähernd zylindrischen Schaft 2 auf, dessen Mittelachse eine Drehachse 3 definiert, die mit der Achse des Mantels 4 des Schaftes im Schneidbereich und/oder in dessen Einspannbereich zur Verbindung mit einer Maschinenspindel zusammenfällt.

In dem an einem Schaftende vorgesehenen und wenigstens bis zu diesem reichenden Schneidbereich weist der Schaft 2 am Umfang eine Aussparung 5 auf, die von der freien Endfläche des Schaftes 2 annähernd kontinuierlich über einen Längsbereich durchgeht, welcher gleich groß oder größer als die zugehörige Erstreckung des Schneidbereiches ist. Dieser Schneidbereich wird durch mindestens einen bzw. einen einzigen Schneidkörper 6 bestimmt, der z.B. aus einem spröden Sinterwerkstoff hoher Härte und Formstabilität besteht. Für diesen Schneidkörper 6 bildet die im Querschnitt von zwei Winkelflanken begrenzte Aussparung 5 mit einer Winkelflanke eine Anlagefläche 9, an welcher der Schneidkörper 6 gegen den auf seine Profilschneide 10 wirkenden Schneiddruck abgestützt ist.

Die Profilschneide 10 bildet eine in wechselnden Richtungen hin und hergehend profilierte Schneidkante 11, deren Flanken in jedem Bereich einerseits von einer quer zur Schneidrichtung 20 liegenden Brustfläche 12 und einer etwa in Schneidrichtung 20 liegenden Rückenfläche 13 begrenzt ist. Durch ihre Profilierung bildet die Schneidkante 11 mehr als drei auf Lücke benachbart zueinander liegende Schneidvorsprünge 14 bzw. Schneidvertiefungen 15, nämlich z.B. das Querschnittsprofil eines zu schneidenden Spitzgewindes, Rundgewindes, Trapezgewindes oder dgl.. Beide seitlich äußeren Flanken 16 jedes Schneidvorsprunges 14 bilden gleichzeitig Innenflanken zweier benachbarter Schneidvertiefungen 15. Statt einer einzigen Profilschneide können auch zwei oder mehr gleichmäßig um die Drehachse 3 verteilte Schneidkanten 11 vorgesehen sein, die durch dieselben oder gesonderte Schneidkörper 6 gebildet und zweckmäßig so angeordnet sind, daß sie entsprechend der Drehung des Schneidwerkzeuges 1 bei derselben Bearbeitungsoperation nacheinander in Schneideingriff kommen.

Wenigstens im Bereich der äußersten spitzen Endflächen der Schneidvorsprünge 14 bzw. der tiefsten Eckzonen der Schneidvertiefungen 15 ist die Rückenfläche 13 der Schneidkante 11 zweckmäßig unter einem Freiwinkel 18 so angeordnet, daß nur die Schneidkante 11, nicht aber die Rückenfläche 13 in Eingriff mit dem Werkstück gelangen kann. Demgegenüber liegt die Brustfläche 12 unter einem Brustwinkel 19 zum jeweils in Eingriff stehenden Bereich der zu bearbeitenden Werkstückfläche 21. Die Brustfläche 12 und die Rückenfläche 13 liegen unter einem zweckmäßig spitzen Schneidenwinkel 17 zueinander, wobei die Summe der drei genannten Winkel 180° ergibt. Die Brustfläche 12 ist als wenigstens teilweise konkav gekrümmte bzw. vertiefte Spanleit- bzw. Spanbrechfläche ausgebildet.

Im dargestellten Ausführungsbeispiel ist die Werkstückfläche 21 eine Innenumfangsfläche zur Herstellung eines Innengewindes, sie kann aber auch eine Außenumfangsfläche zur Herstellung eines Außengewindes sein. Legt man durch die Schneidkante 11 eine Axialebene der zur Drehachse 3 exzentrischen Mittelachse der Werkstückfläche 21 bzw. eine zu dieser Axialebene rechtwinklige Tangentialebene, so bildet diese die Basisebene für die genannten Winkel. Die Schneidrichtung 20 ist dagegen als Tangentialrichtung zur Drehachse 3 so definiert, daß sie etwa rechtwinklig zu einer durch die Schneidkante 11 gehenden Axialebene der Drehachse 3 liegt.

Die Schneidkante 11, die sich über einen zur Drehachse 3 parallelen Längsabschnitt des Schaftes 2 erstreckt, liegt nicht in einer einzigen Axialebene der Drehachse 3, sondern in einer einzigen oder mehreren davon abweichenden Ebenen; hierunter sind jedoch nicht diejenigen Abweichungen zu verstehen, die sich dann ergeben, wenn die Brustfläche 12 nicht in einer der genannten Axialebenen liegt und daher Bereiche der Schneidkante 11, die unterschiedliche Radialabstände von der Drehachse 3 haben, auch gegeneinander in Bezug auf die durch die Schneidkante 11 gelegte Axialebene versetzt sind.

Vielmehr ist es so, daß ein über zwei bzw. drei oder mehr Schneidvorsprünge 14 und/oder Schneidvertiefungen 15 reichender Teilabschnitt der Schneidkante 11 in einer Haupt-Längsrichtung 30 liegt, die so von der Achsrichtung der Drehachse 3 abweicht, daß Bereiche der Schneidkante 11, die gleiche Radialabstände von der Drehachse 3 haben, quer zur genannten Axialebene bzw. in Schneidrichtung 20 gegeneinander versetzt sind. Dadurch liegen z.B. die radial äußersten Endflächen bzw. Endkanten aller Schneidvorsprünge 14 wie auch die tiefsten Bodenbereiche aller Schneidvertiefungen 15 jeweils auf einem gemeinsamen Flugkreis 25 um die Drehachse 3. In Längsrichtung benachbarte Abschnitte der Brustfläche, die z.B. jeweils über einen oder mehrere Schneidvorsprünge 14 und/oder Schneidvertiefungen 15 reichen, können auch treppenförmig oder anders gegeneinander abgestuft sein.

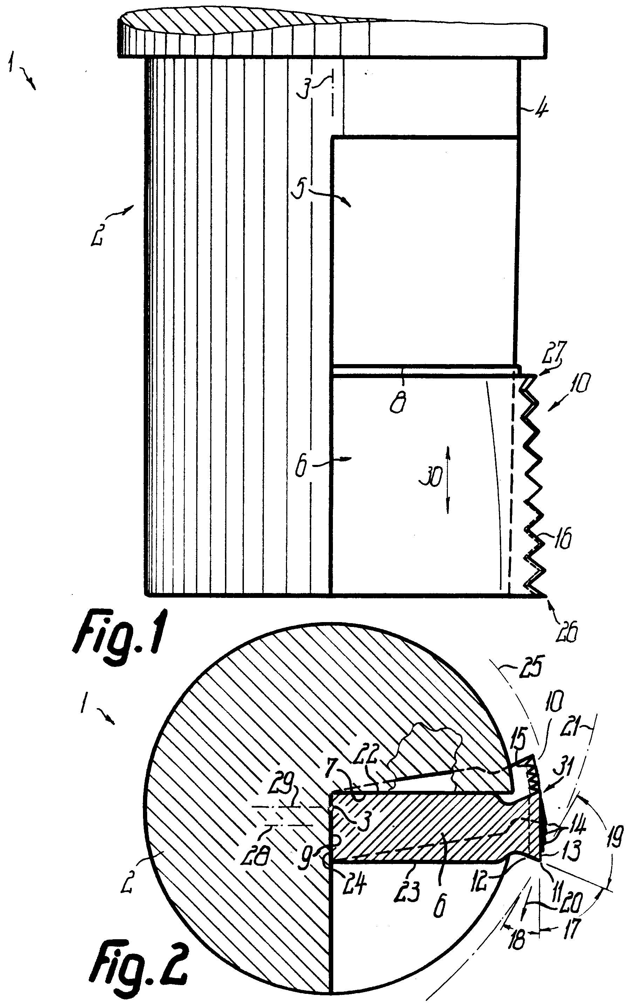

Gemäß Fig. 1 ist das dem freien Schaftende zugehörige Ende 26 der Schneidkante 11 gegenüber dem anderen Ende 27 in Umfangsrichtung des Flugkreises 25 bzw. entgegen Schneidrichtung 20 zurückversetzt, wobei Zonen der Schneidkante 11 von gleichen Radialabständen von der Drehachse 3 von einem zum anderen Ende 26, 27 im wesentlichen auf einer kontinuierlichen Linie liegen, die nach Art einer Steilwendel unter wenigen Winkelgraden schräg zur Drehachse 3 liegt. Dadurch kommen die Zonen gleicher Radialabstände nicht gleichzeitig, sondern progressiv aufeinanderfolgend in Eingriff mit der Werkstückfläche 21. Ist der auf die Drehachse 3 bzw. die Mittelachse der Werkstückfläche 21 bezogene Bogenwinkel, über welchen der jeweilige Schneidvorsprung 14 in Eingriff mit der Werkstückfläche 21 steht, etwa gleich groß wie oder größer als 90°, so ist demgegenüber der Bogenwinkel, über welchen sich die gesamte Schneidkante 11 erstreckt, zweckmäßig wenigstens um die Hälfte oder mindestens ein Viertel kleiner. Dadurch kommt der entgegen Schneidrichtung 20 am weitesten hinten liegende Bereich der Schneidkante in Eingriff mit der Werkstückfläche 21, wenn der in Schneidrichtung 20 vorderste Bereich den tiefsten Eingriff in das Werkstück noch nicht erreicht hat, gerade erreicht hat oder bereits wieder verlassen hat, je nach den an die Bearbeitung zu stellenden Erfordernissen.

Hierbei ist von Bedeutung, daß der Flugkreis 25 der Profilschneide 10 durch Verstellung quer zur Drehachse 3 über die gesamte Länge der Profilschneide 10 gleichzeitig in Eingriff mit der Werkstückfläche 21 gebracht wird, so daß Gewinde in einem einzigen Umlauf des Werkstückes um die Mittelachse der Werkstückfläche 21 hergestellt werden können.

Die Profilierung, die die Schneidvorsprünge 14 und Schneidvertiefungen 15 bildet, geht über die ganze zugehörige Kantenfläche 31 des Schneidkörpers 6 durch, die somit jeweils über eine von zwei gleichen Schneidkanten 11 an die quer zu ihr liegenden Platten- bzw. Körperflächen 22, 23 des Schneidkörpers 6 anschließen kann. Die Profilierungen der Kantenfläche 31 verlaufen dabei in jedem Schnitt quer zur Drehachse 3 etwa rechtwinklig zur Mittelebene 28 dieses Querschnittes oder demgegenüber mit einer der vorgesehenen Gewindesteigung entsprechenden Steigung.

Im Querschnitt kann die die Rückenfläche 13 bildende Kantenfläche 31 geradlinig bzw. rechtwinklig zur Mittelebene 28 vorgesehen sein, wobei sie in diesem Fall zweckmäßig zur Beibehaltung eines konstanten Freiwinkels über die gesamte Länge der Profilschneide 10 einen schränkungs- bzw. wendelartig gekrümmten Verlauf hat. Die Kantenfläche 31 kann aber auch im Querschnitt konkav oder konvex, insbesondere um eine Achse gekrümmt sein, die in der Mittelebene 28 liegt, wobei der Krümmungsradius etwa in der Größenordnung des Radius' des Flugkreises 25 liegen kann. In jedem Fall ist dann die Profilierung bzw. die Kantenfläche 31 im jeweiligen Querschnitt symmetrisch zur zugehörigen Mittelebene 28 ausgebildet.

Weisen die Schneidvorsprünge 14 bzw. die Schneidvertiefungen 15 über ihre gesamte Profillänge konstante Querschnittshöhe auf, so gelten für die Bodenflächen der Schneidvertiefungen 15 dieselben Kriterien wie anhand der äußeren Endflächen der Schneidvorsprünge 14 beschrieben, d.h. daß diese Endflächen und die Bodenflächen in abstandsgleich liegenden Hüllflächen vorgesehen sind.

Mit einer seiner beiden größten Körperflächen 22 ist der Schneidkörper 6 gleichmäßig bzw. vollflächig an der Anlagefläche 7 abgestützt, wobei in jedem Bereich seiner Länge die zugehörige Mittelebene 28 in Schneidrichtung 20 gegenüber der dazu parallelen Axialebene 29 der Drehachse 3 vorversetzt ist, so daß sich der genannte Freiwinkel 18 ergibt. Mit seiner von der Kantenfläche 31 abgekehrten Kantenfläche 24 kann der Schneidkörper 6 an der Anlagefläche 9 abgestützt sein. Ferner kann der Schneidkörper 6 mit einer oder beiden quer zur Drehachse 3 liegenden Endflächen an entsprechenden Schulterflächen 8 des Schaftes 2 abgestützt sein, wobei diese ebenen End- bzw. Seitenflächen im Winkel zueinander liegen können.

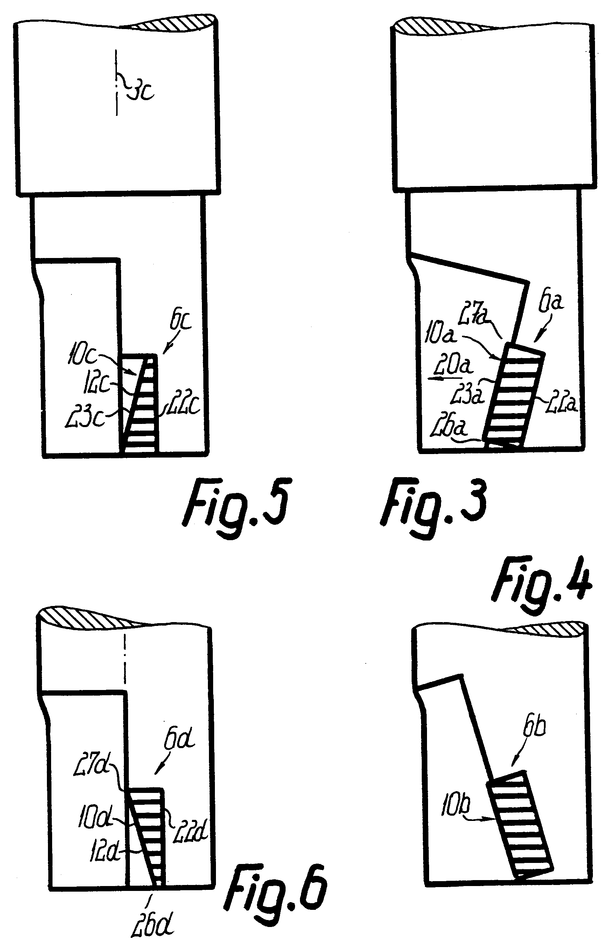

Anstatt gemäß Fig. 1 den Schneidkörper 6 in Ansicht mit annähernd rechteckigen Umrissen auszubilden, kann dieser bevorzugt auch trapezförmig so ausgebildet sein, daß die Profilschneide 10 an der längsten Basiskante dieser Profilplatte liegt. Vorteilhaft ist der Schneidkörper 6 im Zentrum mit einer quer zu den Körperflächen 22, 23 liegenden Durchgangsbohrung für eine Spannschraube versehen, mit welcher er gegen die Anlagefläche 7 gespannt werden kann. Der Schneidkörper 6 kann auch and der von der Profilschneide 10 abgekehrten Kantenfläche oder an einer bzw. beiden quer dazu liegenden Kantenflächen jeweils mit mindestens einer weiteren Profilschneide versehen sein, die entweder gleich wie die Profilschneiden 11 gemäß den Figuren 1 und 2 oder anders als diese, z.B. nach mindestens einer der Figuren 3 bis 10, ausgebildet sind.

In geradliniger Abwicklung sind die Enden 26, 27 der Profilschneide 10 zweckmäßig symmetrisch zu der zwischen ihnen liegenden Mittelebene ausgebildet. Diese Enden können jeweils durch einen Teil eines Schneidvorsprunges gebildet sein, der z.B. dann eine von seinem Scheitel ausgehende, zur Drehachse 3 etwa rechtwinklige Flanke aufweist. Das jeweilige Ende kann aber auch durch den tiefsten Bereich einer Bodenfläche einer Schneidvertiefung 15 gebildet sein.

Zur Herstellung einer Profilierung in der Werkstückfläche 21 wird das Schneidwerkzeug 1 mit seinem Schaft in eine Arbeitsspindel einer Werkzeugmaschine fliegend eingespannt, während das Werkstück etwa achsparallel dazu in eine drehbare Spannvorrichtung eingespannt wird. Das Schneidwerkzeug 1 wird zunächst axial berührungsfrei gegenüber der Werkstückfläche 21 in deren Bearbeitungsbereich verfahren und mit wesentlich höherer Umfangsgeschwindigkeit als die Werkstückfläche 21 gedreht. Nun werden die Profilschneide 10 und die Werkstückfläche 21 radial gegeneinander zugestellt, bis die Hüllfläche bzw. der Flugkreis 25 entsprechend der gewünschten Tiefe der herzustellenden Profilierung die Werkstückfläche 21 überschneidet. Dabei kommen dann bei jeder Umdrehung des Schneidwerkzeuges 1 alle in Schneidrichtung 20 vorderen Bereiche der Schneidkante 11 einmal in und dann wieder außer Schneideingriff mit der Werkstückfläche 21, wobei sie diese in einer zur Werkstückachse exzentrischen Bogenbahn durchlaufen. Soll die Innenprofilierung wie ein Gewinde Steigung aufweisen, so werden das Schneidwerkzeug 1 und die Werkstückfläche 21 während genau eines einzigen Umlaufes dieser Werkstückfläche axial gegeneinander synchron mit der Werkstückdrehung um die Steigung eines Gewindeganges von 360° gegeneinander verstellt. Nachdem so die Innenprofilierung durch Fräsen hergestellt ist, werden die Werkstückfläche 21 und die Profilschneide 10 wieder zunächst radial auseinander bewegt und dann axial außer Eingriff gefahren.

In den Figuren 3 bis 10 ist das Schneidwerkzeug jeweils in Ansicht auf die Kantenfläche 31 und nicht auf die Körperfläche 23, wie in Fig. 1, dargestellt. Während gemäß den Figuren 1 und 2 das hintere Ende 27 in Schneidrichtung 20 vor dem vorderen Ende 26 liegt, ist es gemäß Fig. 3 gegenüber dem vorderen Ende 26a entgegen Schneidrichtung 20a zurückversetzt. Der Schneidkörper 6a ist hier statt verschränkt angenähert eben plattenförmig ausgebildet, so daß sich im wesentlichen ebene und zueinander parallele Körperflächen 22a, 23a ergeben. Die Profilschneide 10a ist jedoch so ausgebildet, daß ihre zur Haupt-Längsrichtung etwa paralallele Mittellinie konstante Radialabstände von der Drehachse hat, d.h. um diese wendelförmig verläuft, obwohl sie etwa in einer Ebene liegt.

Gemäß Fig. 4 ist der Schneidkörper 6b bzw. die Profilschneide 10b statt gemäß Fig. 3 negativ, gemäß den Figuren 1 und 2 positiv geneigt, wobei der Schneidkörper 6b wiederum im wesentlichen eben plattenförmig ausgebildet ist.

Der Schneidkörper 6b bzw. seine Körperfläche 22c kann aber auch gemäß Fig. 5 annähernd achsparallel zur Drehachse 3c liegen, wobei dann zumindest die Brustfläche 12c oder die gesamte davon abgekehrte, zugehörige Körperfläche 23c in der beschriebenen Weise schräggestellt ist. Sie kann dabei in einer Ebene liegen oder eine Schränkungskrümmung haben.

Während gemäß Fig. 5 die Profilschneide 10c wiederum mit negativer Schrägstellung angeordnet ist, ist die Profilschneide 10e gemäß Fig. 6 mit positiver Schrägstellung angeordnet, d.h. daß nicht zuerst ihr vorderes Ende 26d, sondern ihr hinteres Ende 27d in Schneideingriff mit der Werkstückfläche gelangt, wonach sich der Schneideingriff in Richtung zum vorderen Ende 26d über die gesamte Länge der Profilschneide 10d ausbreitet.

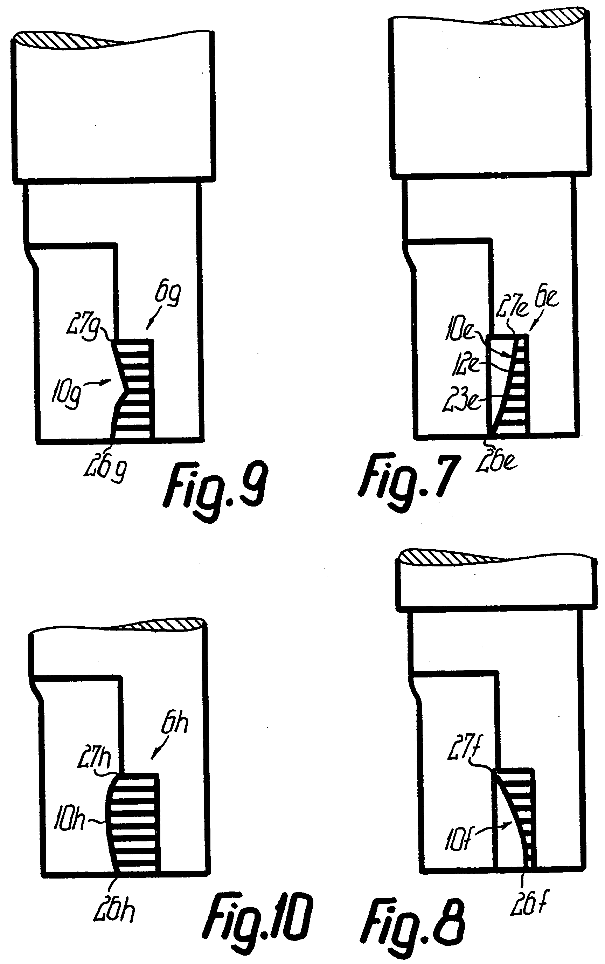

Während diese Ausbreitung bei in Ansicht gemäß den Figuren 5 und 6 geradliniger Profilschneide 10c bzw. 10d als Funktion der Drehbewegung des Schneidwerkzeuges linear bzw. gleichmäßig erfolgt, kann sie durch von der geradlinigen Ausbildung abweichende Ausbildung der Profilschneide gemäß den Figuren 7 bis 10 auch progressiv oder degressiv erfolgen. Gemäß Fig. 7 ist die Profilschneide 10e z.B. im wesentlichen gleichförmig konkav so gekrümmt, daß ihre Steigung im Anschluß an das vordere Ende 26e größer ist als im Bereich des hinteren Endes 27e. Dadurch kommt zuerst das vordere Ende 26e in Schneideingriff, der sich dann zunächst langsam und zunehmend schneller zum hinteren Ende 27e ausbreitet.

Bei der Ausführungsform nach Fig. 8 kommt zuerst das hintere Ende 27f in Schneideingriff, der sich dann zunächst langsam und zunehmend schneller bis zum vorderen Ende 26f ausbreitet, da hier die Profilschneide 10f im Gegensatz zur Profilschneide 10e positiv geneigt ist.

Durch die Art und Gleichmäßigkeit oder Ungleichmäßigkeit der Neigung der Profilschneide werden für jeden Ausbreitungszustand des Schneideingriffes auch diejenigen Kräfte bestimmt, welche durch den Schneideingriff auf den Schneidkörper, die diesen stützenden Anlageflächen 7 bis 9 und den Schaft 2 wirken. Z.B. kann der Schneidkörper gegen die Schulter 8 oder von dieser weg belastet werden, je nachdem welche Art von eventuellem Spiel in der Werkzeuglagerung und/oder in der Werkstücklagerung ausgeglichen werden soll.

Wie Fig. 9 zeigt, kann die Schneidkante 10g auch gleichzeitig oder unmittelbar aufeinanderfolgend mit zwei Bereichen in Schneideingriff gelangen, die in einem gegenüber der Zahnteilung größeren Abstand voneinander liegen, im Abstand von mindestens einem der Enden 26g, 27g vorgesehen sein oder durch diese Enden gebildet sein können. Die Profilschneide 10g verläuft dann gemäß Fig. 9 von einem oder beiden Enden entgegen Schneidrichtung annähernd geradlinig, konvex und/oder konkav gekrümmt in Richtung zur Mitte ihrer Länge, wobei ihr am weitesten zurückversetzter Bereich in dieser oder außerhalb dieser Mitte liegen kann. Durch diese Ausbildung ergibt sich eine noch gleichmäßigere Belastung des Schneidkörpers bzw. des Schneidwerkzeuges und des Werkstückes.

Gemäß Fig. 10 kann die Profilschneide 10h auch mittig oder außermittig zwischen ihren Enden 26h, 27h zuerst in Schneideingriff gelangen, z.B. dadurch, daß sie in Ansicht auf ihre Schneidkantenfläche zwischen den Enden einen einzigen oder mehrere konvexe Bögen bildet. Hier breitet sich der Schneideingriff dann von einem mittleren Bereich in Richtung zu beiden Enden aus.

In den Figuren 1 bis 10 sind für einander entsprechende Teile die gleichen Bezugszeichen verwendet, weshalb auch alle Beschreibungsteile für alle Ausführungsformen sinngemäß gelten. Lediglich der Vereinfachung halber sind weitere Mischformen der dargestellten Ausführungsformen nicht gezeigt, obwohl jede Profilschneide in beliebiger Kombination von einer beliebigen Zahl der Ausführungsbeispiele einen Längsabschnitt aufweisen kann. Ferner kann ein einziges Schneidwerkzeug mehrere in und/oder außer Arbeitsstellung befindliche Profilschneiden dieser Art aufweisen, die gleich oder unterschiedlich ausgebildet sind. Weitere Schneidenformen ergeben sich auch dann, wenn die dargestellten bzw. beschriebenen Ausbildungen als Negativform dieser jeweiligen Schneidenform aufgefaßt werden.

## Patentansprüche

1. Schneidwerkzeug, insbesondere Profil- bzw. Gewindefräser oder dgl., dadurch gekennzeichnet, daß mindestens eine Schneide, wie eine Profilschneide (10) oder dgl., ggf. mit mehreren quer zu einer Schneidrichtung (20) im Abstand nebeneinander liegenden Schneidzonen, wie Schneidvorsprüngen (14) und/oder Schneidvertiefungen (15), oder dgl. vorgesehen ist, und daß vorzugsweise Schneidkanten (11) jeweils eine Schneiden-Brustfläche (12) und eine Schneiden-Rückenfläche (13) sowie Schneidflanken (16) aufweisen und eine Haupt-Längsrichtung (30) der Schneide (10) definieren, wobei insbesondere mindestens zwei Schneidvorsprünge (14) wenigstens teilweise in der Schneidrichtung (20) gegeneinander versetzt sind.

2. Schneidwerkzeug nach Anspruch 1, dadurch gekennzeichnet, daß von einer Gesamt-Anzahl von Schneidvorsprüngen (14) eine Anzahl zwischen zwei und der Gesamt-Anzahl eine im wesentlichen gemeinsame, insbesondere kontinuierlich durchgehende Brustfläche (12) aufweisen.

3. Schneidwerkzeug nach Anspruch 1 oder 2, dadurch gekennzeichnet, daß von einer Gesamt-Anzahl von Schneidvorsprüngen (14) eine Anzahl zwischen zwei und der Gesamt-Anzahl wenigstens teilweise im wesentlichen unter gleichen Winkeln, insbesondere Freiwinkeln (18), zur Schneidrichtung (20) liegende Rückenflächen (13) aufweisen, die vorzugsweise in einer gemeinsamen kontinuierlichen Hüllfläche liegen.

4. Schneidwerkzeug nach einem der vorhergehenden Ansprüche, dadurch gekennzeichnet, daß die Brustfläche (12) bzw. die Haupt-Längsrichtung (30) der Profilschneide (10) in Ansicht auf die Rückenfläche (13) wenigstens teilweise geradlinig, konkav gekrümmt und/oder konvex gekrümmt ausgebildet ist.

5. Schneidwerkzeug nach einem der vorhergehenden Ansprüche, dadurch gekennzeichnet, daß die Brustfläche (12) von einem Ende (26) der Profilschneide (10) zum anderen Ende (27) mit im wesentlichen gleicher und/oder gleichgerichteter Steigung und insbesondere in wenigstens einem Längsabschnitt geringster Steigung höchstens steigungsfrei ausgebildet ist.

6. Schneidwerkzeug nach einem der vorhergehenden Ansprüche, dadurch gekennzeichnet, daß die Profilschneide (10) ein einem freien Werkzeugende zugehöriges vorderes Schneidende (26) und ein näher bei einem Spannende eines Werkzeugschaftes (2) anzuordnendes hinteres Schneidende (27) definiert und daß die Brustfläche (12) wenigstens teilweise zum vorderen Schneidenende (26) ansteigt und/oder abfällt.

7. Schneidwerkzeug nach einem der vorhergehenden Ansprüche, dadurch gekennzeichnet, daß von einer Gesamt-Anzahl von Schneidvorsprüngen (14) eine Anzahl zwischen zwei und der Gesamt-Anzahl auf einer gemeinsamen Linie liegen, insbesondere im wesentlichen gleiche Radialabstände von einer Arbeits-Drehachse (3) des Schneidwerkzeuges (1) aufweisen und/oder entlang einer Spiralwendel um die Drehachse (3) vorgesehen sind.

8. Schneidwerkzeug nach einem der vorhergehenden Ansprüche, dadurch gekennzeichnet, daß von einer Gesamt-Anzahl von Schneidvorsprüngen (14) und/oder Schneidvertiefungen (15) eine Anzahl zwischen zwei und der Gesamt-Anzahl gleiche Profilform und/oder gleiche Abstände voneinander haben, wobei vorzugsweise mindestens zwei, bis im wesentlichen alle jeweils einander entsprechenden Schneidzonen (14 oder 15) für den annähernd gleichzeitig beginnenden bzw. endenden und/oder gleich tiefen Bearbeitungseingriff in eine Werkstückfläche (21) vorgesehen sind.

9. Schneidwerkzeug nach einem der vorhergehenden Ansprüche, dadurch gekennzeichnet, daß mindestens eine Profilschneide (10) durch wenigstens einen von einem Werkzeugträger gesonderten Schneidkörper (6), insbesondere eine Wendeschneidplatte mit mindestens zwei Profilschneiden (10) gebildet ist und daß vorzugsweise mindestens ein Schneidkörper (6) mit einem Bereich etwa konstanter Dicke wenigstens teilweise zur Schneidrichtung (20) schräggestellt ist und/oder wenigstens teilweise einen Bereich bildet, der etwa entsprechend der Steigung der Brustfläche (12c) unterschiedliche Dicke aufweist.

10. Schneidwerkzeug nach einem der vorhergehenden Ansprüche, dadurch gekennzeichnet, daß die Schneidvorsprünge (14) über die Dicke eines Schneidkörpers (6) an einer zugehörigen Kantenfläche (31) im wesentlichen durchgehen und/oder an beiden Längskanten der Kantenfläche (31) jeweils eine Profilschneide (10) bilden, wobei die Profilvorsprünge (14) an der Kantenfläche (31) vorzugsweise schräg zu einer mittleren Plattenebene des Schneidkörpers (6) bzw. annähernd parallel zur Schneidrichtung (20) liegen.
